# EUROPEAN PATENT APPLICATION

(11) **EP 0 989 553 A2**
(43) Date of publication of application: **29.03.2000**
(21) Application number: 99118018.3
(22) Date of filing: 21.09.1999
(51) Int. Cl.: G11B 20/00

(54) **Information recording apparatus and method for same, information playback apparatus, information protection apparatus, and information recording medium**

(30) Priority: 21.09.1998 JP 26671598; 01.10.1998 JP 28023698
(71) Applicant: VICTOR COMPANY OF JAPAN, LTD., Yokohama-shi Kanagawa 221 (JP)
(72) Inventor: Hirata, Atsumi, Fujisawa-shi, Kanagawa-ken (JP); Suzuki, Hideo, Chiba-shi, Chiba-ken (JP); Miyazaki, Ken, Yokohama-shi, Kanagawa-ken (JP)
(74) Representative: HOFFMANN - EITLE

(57) **Abstract**

Information DI recorded on a disk and which is distinctively characteristic to the individual disk is used to encode contents. When the contents are to be played back, the encoded contents are decoded by the characteristic information DI that is recorded on the disk D. By recording onto the disk D the characteristic disk information DI and identifying information that is distinctive to the particular contents, and then searching from the identifying information for the encoded key using a CI comparison section (210), it is possible to decode and play back the contents of the disk.

## Description

### BACKGROUND ART OF THE INVENTION

### 1. Field of the Invention

The present invention relates to an information protection apparatus for the protection of information that is pre-recorded on a disk (disc) and an associated method, and more particularly to a method of protecting information from improper (illegal) copying, by recording onto a disk information that is characteristic of the disk.

The present invention also relates to a method of protecting information and an information recording medium for protecting information, wherein by recording onto each disk information that is characteristic of the particular disk and an identifier that is characteristic of the particular contents, it is possible not only to prevent improper copying, but also to permit proper (legal) access holders to easily copy the disk.

### 2. Description of the Related Art

In a recordable disk, such as a CD-R, PD, DVD-RAM, or DVD-RW (hereinafter simply referred to as a disk) and an associated disk apparatus, in the case in which proper access is obtained either by a broadcast or via a network, thereby enabling one-time recording, it must be made simple to record contents such as the moving images of, for example, a movie, static images (still pictures), and music. There is also a desire that the disk permit playback after recording, using any proper apparatus.

In such a recordable disk medium and apparatus, this is a need to protect the copyright of the disk from improper copying. However, the need to facilitate authorized recording and playback and the need to prevent copying are at conflict, and it is difficult to achieve both these effects.

In an information protection apparatus of the past, in order to solve the problem of this conflict, unauthorized (illegal) copying was prevented by the use of a user ID.

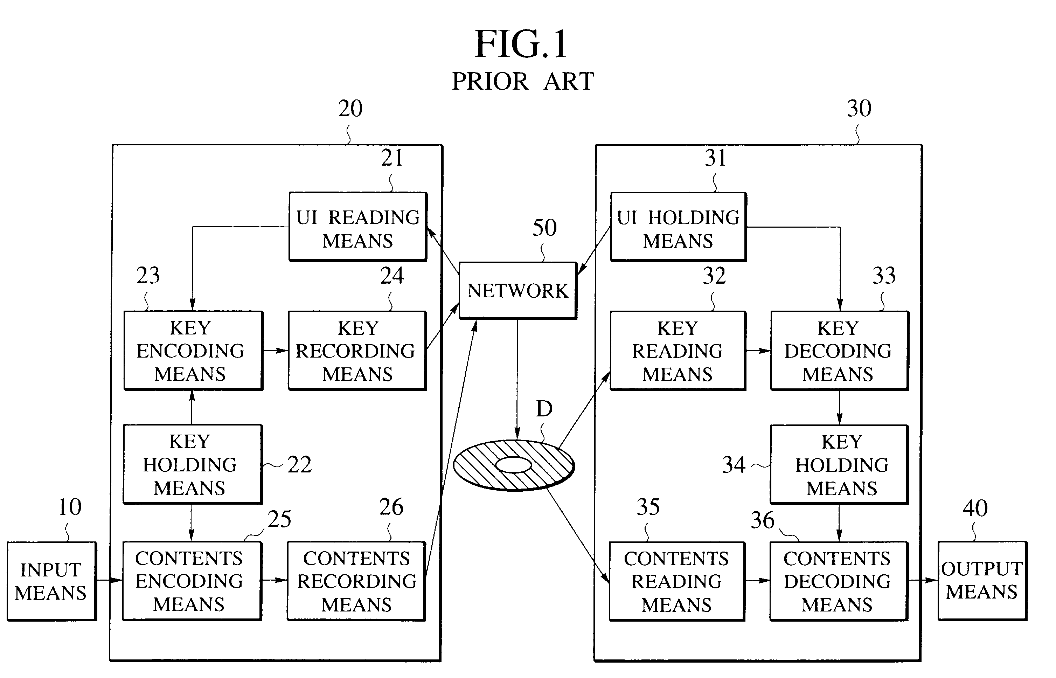

As shown in Fig. 1, such an information protection apparatus of the past had an input means 10, which input contents such as music, an information recording means 20, which encoded and recorded contents onto a general type of information recording medium D, an information playback means 30, which decoded and played back the information that was recorded on the information recording medium D, and an output means 40, which output the decoded information, such as the contents of the medium D.

The above-noted information recording means 20 has a user ID reading means 21, which reads the user ID (UI) that is sent from the information playback means 30 via a network 50, a key holding means 22, which holds a key for the purpose of encoding contents that are input via the input means 10, a key encoding means 23, which encodes the key that is held by the key holding means 22, in accordance with the user ID (UI) that is read by the user ID reading means 21, a key recording means 24, which, via a network 50, records the key E (KEY), which is encoded by the key encoding means 23, onto the information recording medium D, a contents encoding means 25, which encodes the contents CT that are input via the input means 10, in accordance with the key KEY, which is held by the key holding means 22, and a contents recording means 26, which records these contents CT, which are encoded by the contents encoding means 25, onto the information recording medium D, via the network 50.

The information playback means 30 has a user ID (UI) holding means 31, which holds the user ID (UI) and transmits the user ID via the network 50, a key reading means 32, which reads the encoded key E (KEY) that is recorded on the information recording medium D, a key decoding means 33, which decodes the encoded key E (KEY) which was read by the key reading means 32, in accordance with the user ID, a key holding means 34, which holds the decoded key, a contents reading means 35, which reads the encoded contents E (CT) that are recorded on the information recording medium D, and a contents decoding means 36, which decodes the encoded contents E (CT) that are read by the contents reading means 35, in accordance with the key KEY that is held by the key holding means 34, and outputs the decoded contents to the output means 40.

The operation of the above-described information protection apparatus of the past is as follows.

When the contents CT are input via the input means 10, these are encoded at the contents encoding means 25, in accordance with a key KEY that is held in the key holding means 22, thereby becoming the encoded contents E (CT), these encoded contents being recorded by the contents recording means 26 onto the disk D via the network 50.

A user ID (UI), which is uniquely held by each user, is sent via the network 50 from the user ID holding means 31 to the user ID reading means 21, and the key that is held in the key holding means 22 is encoded at the key encoding means 23, thereby becoming the encoded key E (KEY). Recording onto the disk D of the encoded key E (KEY) is done by the key recording means 24 via the network 50.

The user plays back the disk D using the information playback means 30. First, the encoded key E (KEY) is read from the disk D by the key reading means 32, after which the encoded key E (KEY) is decoded at the key decoding means 33, the decoded key KEY being held in the key holding means 34. The encoded contents E (CT) are read by the contents reading means 35 and, at the contents decoding means 36, these are decoded in accordance with the key KEY that is held in the key holding means 34 to the contents (CT), which are sent to the output means 40 and then output.

In an information protection apparatus of the past such as described above, however, because the key KEY is encoded by a unique user ID in the information playback means 30 and recorded onto the disk D, the disk D cannot be read by other information playback means, because the user ID would be different. For example, the problem arises in which, if a user buys or adds a new player, which serves as the information playback means, the new or added player cannot be used to playback the disk D.

One envisionable approach to enabling playback using other players is to record the user ID onto the disk D.

If the user ID is recorded onto the disk, however, while it is indeed possible to playback disk D on a different player, by having the user ID holding means read the user ID from the disk D, because disk D is completely copied, this facilitates creation of an unauthorized (illegal) copied disk D', thereby resulting in another problem, which is that of lack of protection of the copyright of the information.

### SUMMARY OF THE INVENTION

The present invention was made in consideration of the above-noted problems with the related art, and has as an object the provision of an information protection apparatus, which prevents the unauthorized copying of contents transmitted via a network or a broadcast that were recorded by an authorized user onto a disk from that disk onto another disk, and which also enables an authorized disk to be played back on any playback apparatus.

It is a further object of the present invention to provide a method for the information protection association with the above-noted apparatus, and an information recording medium for the purpose of protecting information.

It is another object of the present invention to provide a method for protecting information, by recording onto each disk information that is distinctively characteristic of the particular disk and an identifier that is distinctively characteristic of particular contents, it is possible not only to prevent improper copying, but also to permit authorized users to easily copy the disk.

In order to achieve the above-noted objects, the first aspect of the present invention is a method for recording information, comprising the steps of:
pre-recording onto each information recording medium characteristic information that is distinctively characteristic thereto by using a method that prevents the characteristic information from being changed;
encoding information by using the characteristic information as a key; and
recording the encoded information onto the information recording medium.

According to the above-noted method, even if the user buys or adds a new information playback apparatus, because the characteristic information is recorded onto the information recording medium, it is possible to play back the contents thereof with a different information playback apparatus.

Additionally, even if the disk is copied in full in an attempt to create an unauthorized copy disk, when an attempt is made to play back the copied disk, because the characteristic information is characteristic to each individual disk, the characteristic information when the encoding was done is different from the characteristic information when the decoding is done, making it impossible to decode the contents of the disk. The result is that unauthorized copying of the disk is prevented.

The second aspect of the present invention provides an information recording apparatus that encodes and records information onto an information recording medium, comprising:
means for reading characteristic information that is recorded onto the information recording medium, and which is distinctively characteristic to each information recording medium;
means for encoding contents that are input, in accordance with characteristic information that was read by the characteristic information reading means; and
means for recording the contents, which are encoded by the contents encoding means, onto the information recording medium.

According to the above-noted configuration, it is not only possible to prevent unauthorized copying, but also possible to play back a properly recorded disk on any playback apparatus.

The third aspect of the present invention provides an information playback apparatus that decodes and plays back information that is recorded on an information recording medium, comprising:
means for reading distinctively characteristic information that is recorded on each information recording medium;
means for reading encoded contents that are recorded on the information recording medium; and
means for decoding the encoded contents that are read by the contents reading means, in accordance with the characteristic information and outputting the decoded contents.

According to the above-noted configuration, it is not only possible to prevent unauthorized copying, but also possible to play back a properly recorded disk on any playback apparatus.

The fourth aspect of the present invention provides an method for protection information, comprising the steps of:
pre-recording onto each information recording medium characteristic information that is distinctively characteristic thereto by using a method that prevents the characteristic information from being changed;
encoding information by using the characteristic information as a key;
recording the encoded information onto the information recording media; and
decoding the recorded information in accordance with the characteristic information and playing back the decoded information.

According to the above-noted configuration, by using not only the characteristic information, but also a separate key to encode information, it is possible to prevent unauthorized copying and possible to play back a properly recorded disk using any playback apparatus, and possible to provide further protection for the information.

The fifth aspect of the present invention provides an method for protecting information, which further comprises the step of:
generating a verifier from the characteristic information and information for verification and making a judgment as to whether or not this verifier is the same as a verifier that is recorded on an information recording medium.

According to the above-noted configuration, by making a judgment as to whether verifiers are the same, it is possible to perform detection even in this case in which the characteristic information has been changed, thereby providing a further degree of protection from unauthorized copying.

The sixth aspect of the present invention provides an information recording medium, onto which is recorded information that is distinctively characteristic to the individual information recording medium, either using a method that prevents changing the characteristic information, or in an area that cannot be changed.

According to the above-noted configuration, it is not only possible to prevent unauthorized copying, but also possible to play back a properly recorded disk on any playback apparatus.

The seventh aspect of the present invention provides an method for protecting information, in which information is encoded according to a key and recorded onto an information recording medium that has characteristic information that is distinctively characteristic to the individual information recording medium, the information that is recorded onto the information recording medium being decoded by the key and played back, the method comprising the steps of:
recording the key that is encoded by the characteristic information and identification information that is distinctively characteristic of each information onto the information recording medium; and
identifying the key that was used to encode the information by means of the identification information, decoding the encoded information with the key, and playing back the information.

In this method for protecting information, a key that is encoded by the characteristic information and identifying information that is distinctively characteristic of each information are recorded onto the information recording medium, the key that was used to encode the recorded information is identified by means of the identifying information, enabling the decoding and playback of the encoded information.

According to the above-noted configuration, by using not only characteristic information that is distinctively characteristic to each information recording medium, but also identifying information that is characteristic to each information, not only is unauthorized copying prevented, but also it is possible for a person who has followed the proper procedure to easily copy the information recording medium.

The eight aspect of the present invention provides an method for protecting information, whereby information is encoded and recorded onto an information recording medium that has information that is distinctively characteristic to the individual recording medium, the information that is recorded onto the information recording medium being decoded and played back, the method comprising the steps of:
recording the information that was encoded in accordance with the characteristic information and a characteristic information function that was formed from the characteristic information onto the information recording medium; and
decoding the characteristic information function and generating from the resulting characteristic information a difference, thereby decoding the encoded information, and playing back the decoded information.

In this method for protecting information, information that is encoded according to the above-noted characteristic information and characteristic information in the form of a function are recorded onto the information recording medium, the characteristic information in the form of a function being decoded and a difference is generated from characteristic information is generated, so as to decode the encoded information and play back the information.

According to the above-noted configuration, by generating a difference from the characteristic information obtained by decoding the characteristic information in the form of a function and using this difference to decode the encoded in, it is possible to provide protection unauthorized copying, and also possible for a person who has followed the proper procedure to easily copy the information recording medium.

The ninth aspect of the present invention provides an information recording medium, onto which is recorded information that is distinctively characteristic thereto, either using a method that prevents changing the characteristic information, or in an area that cannot be changed, and also onto which is recorded identifying information that is distinctively characteristic of each information.

According to the above-noted configuration, by using not only information that is characteristic to each information recording medium, but also identifying information that is distinctively characteristic to each information, not only is unauthorized copying prevented, but also it is possible for a person who has followed the proper procedure to easily copy the information recording medium.

The tenth aspect of the present invention provides an information recording medium, onto which is recorded information that is distinctively characteristic thereto, either using a method that prevents changing the characteristic information, or in an area that cannot be changed, and also onto which is recorded a difference that is generated from the characteristic information.

According to the above-noted configuration, by using a difference that is generated from the decoded characteristic information that is in the form of an equation to decode encoded information, it is possible to prevent unauthorized copying, and also possible for a person who has followed the proper procedure to easily copy the information recording medium.

### BRIEF DESCRIPTION OF THE DRAWINGS

Fig. 1 is a block diagram that shows an information protection apparatus of the past (prior art).

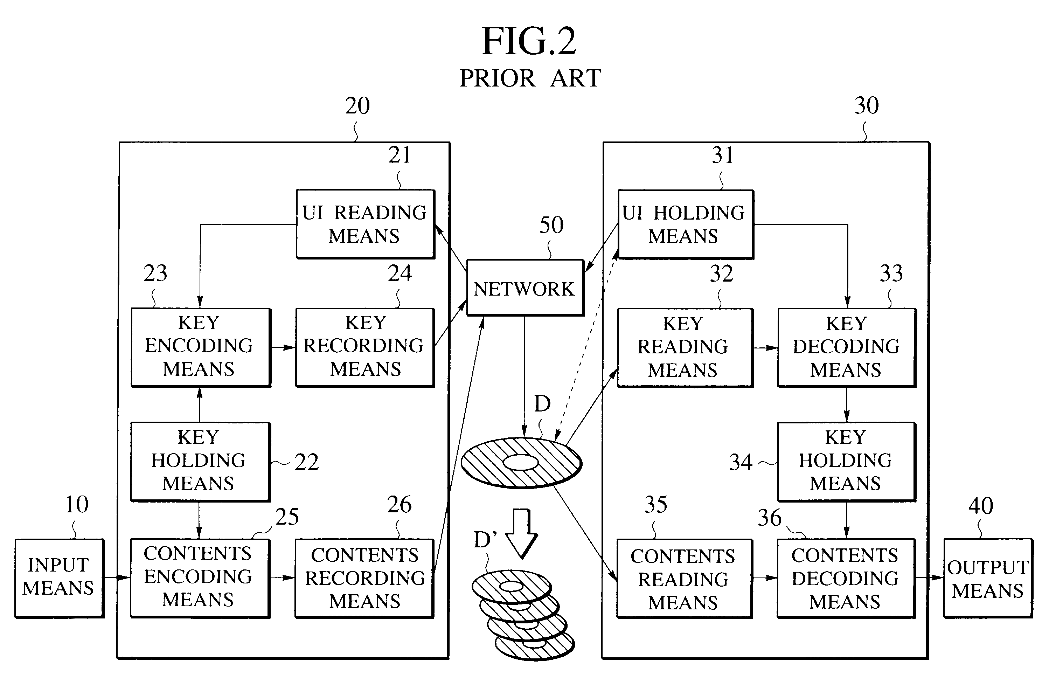

Fig. 2 is a block diagram that illustrates the recording onto a disk of a user ID in the information protection apparatus of the past shown in Fig. 1.

Fig. 3 is a block diagram that shows the configuration of an information protection apparatus according to the first embodiment of the present invention.

Fig. 4 is a drawing that shows a disk that serves as an information recording medium.

Fig. 5 is a block diagram that shows the configuration of an information playback apparatus according to the second embodiment of the present invention.

Fig. 6 is a block diagram that shows the configuration in the case in which there is an intervening network in the information playback apparatus according to the first embodiment, which is shown in Fig. 3.

Fig. 7 is a block diagram that shows the configuration in the case in which there is an intervening network in the information playback apparatus according to the second embodiment, which is shown in Fig. 5.

Fig. 8 is a block diagram that shows the configuration of an information protection method according to the third embodiment of the present invention.

Fig. 9 is a block diagram that shows the configuration of an information protection method according to the fourth embodiment of the present invention.

### DETAILED DESCRIPTION OF THE PREFERRED EMBODIMENTS

Embodiments of the present invention are described in detail below, with reference to relevant accompanying drawings.

In an information protection apparatus according to the first embodiment of the present invention, information which is distinctively characteristic to each information recording medium is pre-recorded thereon, the contents being encoded in according to this characteristic information.

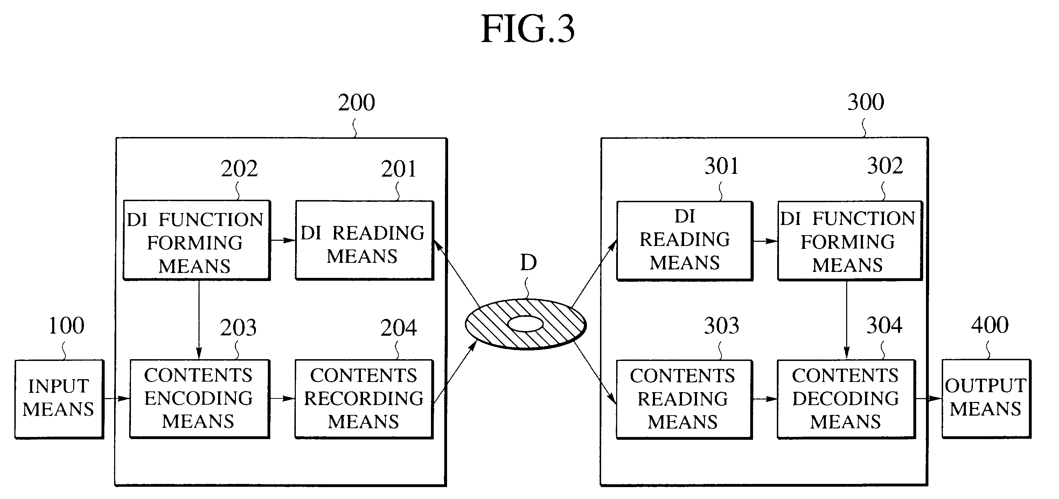

Fig. 3 is a block diagram that shows the configuration of an information playback apparatus according to this embodiment. As shown in Fig. 3, the information playback apparatus according to this embodiment includes an input means 100 for inputting contents, such as moving images, static images (still pictures), and music, an information recording means 200 for encoding and recording information such as the contents onto a general information recording medium D, an information playback means 300 for decoding and playback of the information that is recorded on the information recording medium, and an output means 400 for outputting, for example, the decoded contents.

In the above embodiment, the information recording means 200 has a DI reading means 201 for reading disk information DI that is recorded on each of the information recording media D, a DI function forming means 202 for forming a function of the characteristic disk information DI that is read by the DI reading means 201, a contents encoding means 203 for encoding the contents CT that are input from the input means 100, and a contents recording means 204 for recording the encoded contents E (CT) that were encoded by the contents encoding means 203 onto the information recording medium D.

The information playback means 300 has a DI reading means 301 for reading the characteristic disk information DI that is recorded on each information recording medium D, a DI function forming means 302 for forming a function of the characteristic disk information DI that is read by the DI reading means 301, a contents reading means 303 for reading the encoded contents E (CT) that are recorded on the information recording medium D, and a contents decoding means 304 for decoding the encoded contents E (CT) that are read by the contents reading means 303, in accordance with the characteristic information function F (DI) that was formed by the DI function forming means 302, and for outputting these decoded contents to the output means 400.

The operation of the above-noted embodiment of an information protection apparatus according to the present invention is described below.

First, when contents CT are input via the input means 100, the DI reading means 201 reads the characteristic information DI of the disk D, this characteristic information being formed into a function F (DI) by the DI function forming means 202. Then the contents encoding means 203 encodes the input contents CT using the characteristic information function F (DI) thereby obtaining the encoded contents E (CT), these encoded contents being recorded onto the disk D by the contents recording means 204.

Then, in the case in which a user plays back the disk D in an information playback means 300, the characteristic information DI of the disk D are first read by the DI reading means 301, this characteristic information being formed into a function F (DI) by the DI function forming means 302. Next, the encoded contents E (CT) are read from the disk D by the contents reading means 303, these encoded contents E (CT) being then decoded by the contents decoding means 304 in accordance with the characteristic information function F (DI), thereby converting them to the contents CT, which are sent to the output means 400 for output.

While in the above-noted embodiment a function is formed by the DI function forming means 202 of the characteristic information DI, this characteristic information function F (DI) being used to encode the contents CT, it is also possible to encode the contents CT directly with the characteristic information DI, without forming the characteristic information into a function, in which case the characteristic information is not formed into a function in the information playback means 300 as well, the contents CT being decoded by the characteristic information DI.

As described above, because in this embodiment of an information protection apparatus distinctive information that is distinctively characteristic to each disk is pre-recorded onto each disk, this characteristic information being used to encode the contents, even if the user buys or adds a new information playback apparatus, the fact that the characteristic information is recorded onto each information recording medium enables the playback of the contents by a different information playback means.

If an attempt is made to create an authorized copy of the disk by copying the entire disk, when an attempt is made to play back the copied disk, because the characteristic information is distinctively characteristic to each individual disk, the characteristic information when the encoding was done is different from the characteristic information when the decoding is done, making it impossible to decode the contents of the disk. The result is that unauthorized copying of the disk is prevented.

To make this effect of the above-noted embodiment of the information protection apparatus possible, it is necessary to record the characteristic information DI onto the information recording medium in a manner that prevents its unauthorized modification. This characteristic information DI is described below.

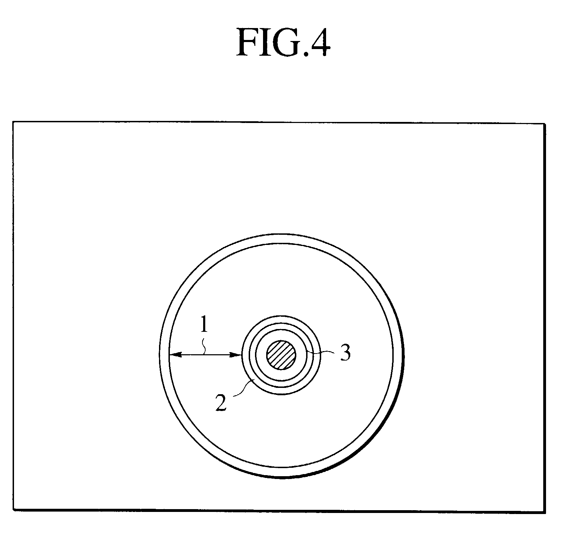

As shown in Fig. 4, a general write-once or overwritable information recording medium (hereinafter referred to simply as a disk medium) onto which information is recorded in the form of concentric circles or a spiral often has areas into which a general user cannot record, these being a BCA (burst cutting area) 3 and a read-in area 2, in addition to a data area 1, into which the user can record. In such a disk medium, by recording the characteristic information DI (which can be arbitrarily formatted of numbers, symbols, letters, and other data) into a specific area, or by using a method whereby this recording is done at the time the disk is manufactured, it is possible to distinguish between each individual disk.

The above-noted characteristic information DI is information which is either a unique identifier for each of the disk media, or an identifier that is unlike to be the same as the characteristic information DI of another disk. While the above-noted specific area can be made the BCA (burst cutting area) 3, the read-in area 2, or the data area 1 that are shown in Fig. 4, the specific area is not limited to these areas, and can be selected as any arbitrary recording area.

It is necessary to record this characteristic information DI by a method that is not usable by the user to record, or which prevents the user from making an unauthorized modification to the characteristic information. For example, it is possible to record this by such methods as mechanical embossed pits that are made on the disk, using a strong on/off-switched laser light to change the reflectivity of the disk by either changing the composition of or destroying the disk in a minute region thereof, or destroying a part of a signal that is mechanically pre-recorded on the disk.

An information protection apparatus according to the second embodiment of the present invention is described below, with reference to the drawings. In addition to the characteristic information, this embodiment uses a separate key to encode contents.

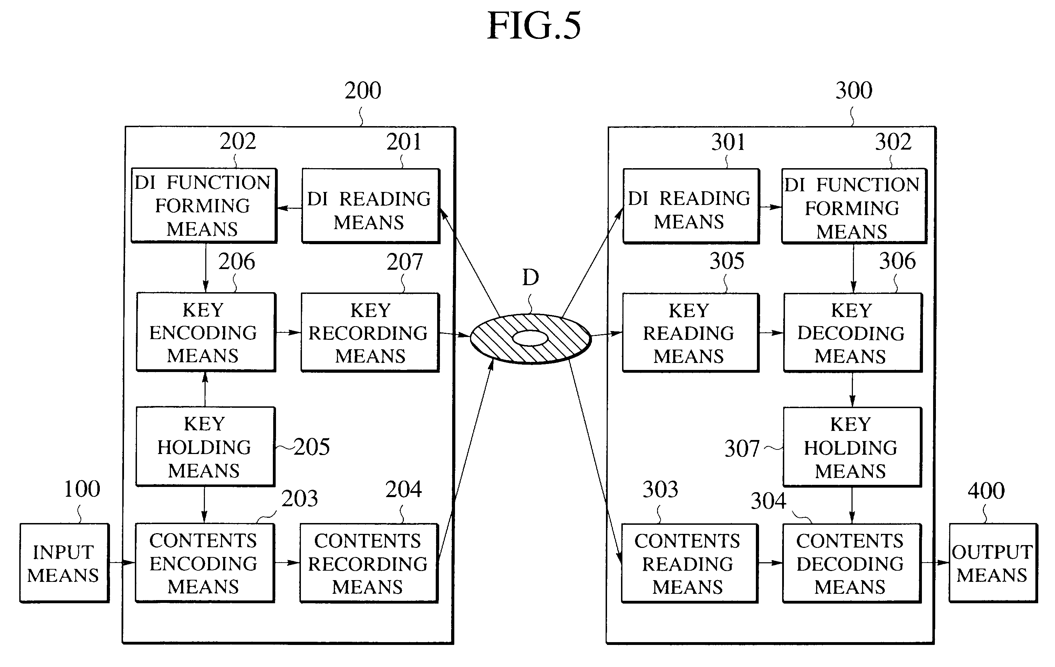

Fig. 5 is a block diagram that shows the configuration of this embodiment of an information protection apparatus. As shown in Fig. 5, an information protection apparatus according to this embodiment has an input means 100 for inputting contents, such as moving images, static images, and music, an information recording means 200 for encoding and recording information such as the contents onto a general information recording medium D, an information playback means 300 for decoding and playing back of the information that is recorded on the information recording medium, and an output means 400 for outputting, for example, the decoded contents.

In the above-noted embodiment, the information recording means 200 has a DI reading means 201 for reading disk information that is recorded on each of the information recording media D, a DI function forming means 202 for forming a function of the characteristic information DI that is read by the DI reading means 201, a key holding means 205 for holding a key KEY for the purpose of encoding the contents CT that are input, a key encoding means 206 for encoding the key KEY that is held by the key holding means 205, in accordance with the characteristic information function F (DI), a key recording means 207 for recording the encoded key E (KEY) that is encoded by the key encoding means 206 onto the information recording medium D, a contents encoding means 203 for encoding the contents CT that are input via the input means 100, in accordance with the key KEY that is held by the key holding means 205, and a contents recording means 204 for recording the encoded contents E (CT) that are encoded by the contents encoding means 203 onto the information recording medium D.

The information playback means 300 in the above-noted embodiment has a DI reading means 301 for reading the characteristic information DI that is recorded on each information recording medium D, a DI function forming means 302 for forming a function of the characteristic information DI that is read by the DI reading means 301, a key reading means 305 for reading the encoded key E (KEY) that is recorded on the information recording medium D, a key decoding means 306 for decoding the encoded key E (KEY), in accordance with the characteristic information function F (DI), a key holding means 307 for holding the key KEY that was decoded by the key decoding means 306, a contents reading means 303 for reading the encoded contents E (CT) that are recorded on the information recording medium D, and a contents decoding means 304 for decoding the encoded contents E (CT), in accordance with the key KEY that is held in the key holding means 307 and for outputting these decoded contents to the output means 400.

The operation of the above-noted embodiment of an information protection apparatus according to the present invention is as follows.

First, when contents CT are input via the input means 100, the input contents CT are encoded by the contents encoding means 203, in accordance with the key KEY that is held in the key holding means 205, so as to obtain the encoded contents E (CT), these encoded contents E (CT) being then recorded onto the disk D. In the DI reading means 201, the characteristic information DI of the disk D is read, this characteristic information DI being formed into the characteristic information function F (DI) by the DI function forming means 202. Then, in the key encoding means 206, the key KEY which is held in the key holding means 205 is encoded so as to obtain the encoded key E (KEY), this encoded key E (KEY) being then recorded onto the disk D by the key recording means 207.

In the case in which a users is to play back the disk D in the information playback means 300, first the DI reading means 301 reads the characteristic information DI of the disk D from the disk D, this characteristic information DI is formed into the function F (DI) by the DI function forming means 302. Then, the encoded key E (KEY) that is read by the key reading means 305 is decoded by the key decoding means 306 using the characteristic information function F (DI), the resulting key KEY being held in the key holding means 307.

The encoded contents E (CT) are read from the disk D by the contents reading means 303, these encoded contents E (CT) being then decoded at the contents decoding means 304, in accordance with the key KEY that was held in the key holding means 307, thereby obtaining the contents CT, which are sent to the output means 400 for output.

While in the above-noted embodiment a function is formed by the DI function forming means 202 of the characteristic information DI, this characteristic information function F (DI) being used to encode the contents CT, it is also possible to encode the contents CT directly with the characteristic information DI, without forming the characteristic information into a function, in which case the characteristic information is not formed into a function in the information playback means 300 as well, the contents CT being decoded by the characteristic information DI.

As described above, because in the second embodiment of an information protection apparatus because rather than encoding the contents by means of the characteristic information, the contents are encoded by a separately held key, this key being encoded by the characteristic information, even the user buys or adds a new information playback apparatus, the contents can be played back therewith and it is possible to prevent unauthorized copying of the disk, in the same manner as described for the first embodiment, and to provide a further measure of information protection.

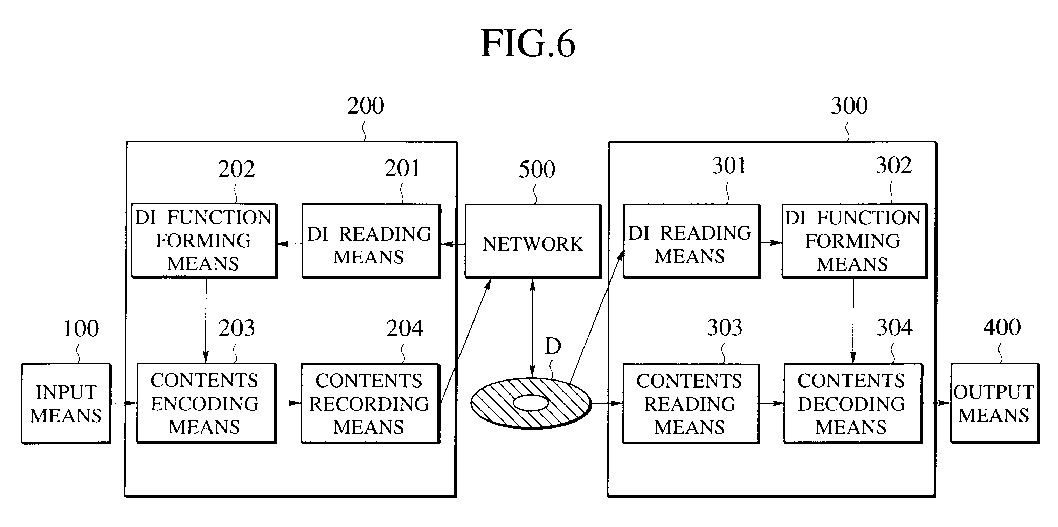

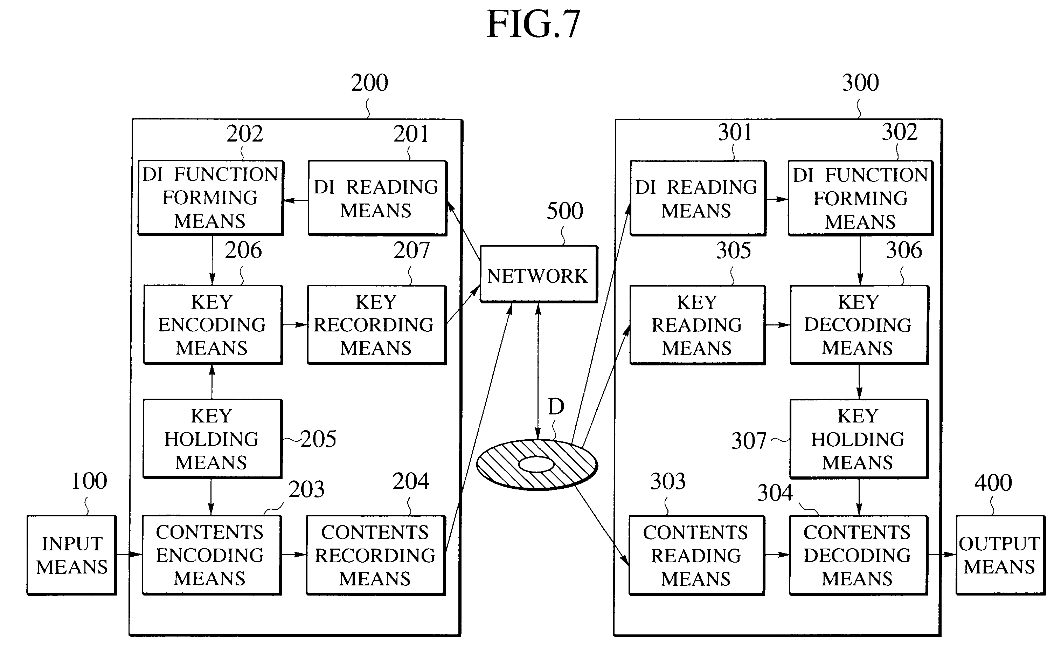

In the first and second embodiments, shown in Fig. 3 and Fig. 5 respectively, the cases in which the contents are transmitted via a network (of an arbitrary type, such as a broadcast type, point-to-point type, or bus line type network) are shown in Fig. 6 and Fig. 7, respectively. The basic configurations are the same as shown in Fig. 3 and Fig. 5, respectively, with the intervention of a network 500 when recording onto the disk D.

A method of recording not only characteristic information DI, but also a verifier, onto an information recording medium is described below.

With a write-once disk medium, once data is recorded onto a physical address, although it is possible to destroy the data, it is not possible to record different data in the same physical address, thereby eliminating the concern of unauthorized tampering with data. In the case of an overwritable disk, however, there is a problem with improper changes to information, because after the characteristic information is recorded at some physical address, it is possible that this information be either purposely or inadvertently changed.

To solve the above-noted problem, the combination of the characteristic information and a verifier is operated on by an appropriate function, the resulting function value, this being the output value of the function, being recorded in a specific area as a verifier. In the case in which the characteristic information has been changed, because the verifier changes, it is possible to detect that the characteristic information has been changed.

Any arbitrary function that exhibits a change in its output value when the characteristic information is changed, and which also exhibits a change in output value when the separate verification information is changed can be used as the function in this method. Functions that have this type of function are an arbitrary hash function, such as SHA and MD5, and an arbitrary encoding function such as the block code DES, open key encryption RSA in the CBC (cipher block chaining) mode, OFB (output feedback) mode, or CFB (cipher feedback) mode. Because the function used can be a function that can handle an input of an arbitrary length, it is possible to use information of an arbitrary length in an arbitrary area within the disk as the separate verification information. Although the verifier, which is the output of this function, can be recorded for example in the BCA (burst cutting area) 3, the read-in area 2, or the data area 1 that are shown in Fig. 4, the area is not limited to these areas, and can be selected as any arbitrary recording area.

As a specific example of a verifier, assume that the characteristic information "fedcba98 76543210" is recorded at the beginning of the last sector in the data area, that the separate information for verification
"12345678 9abcdef0 12345678 9abcdef0 12345678 9abcdef0
12345678 9abcdef0 12345678 9abcdef0 12345678 9abcdef0
12345678 9abcdef0 12345678 9abcdef0" is part or all of the read-in area, and further that these two are combined to form the input of the function, which is then as follows.
"12345678 9abcdef0 12345678 9abcdef0 12345678 9abcdef0
12345678 9abcdef0 12345678 9abcdef0 12345678 9abcdef0
12345678 9abcdef0 12345678
9abcdef0 fedcba98 76543210"

If the function to which the above input is made is the hash function SHA-1 [1], the output value (verifier) is as follows.
"f18ea0b5 a80901bf d348fa03 4c173b88 eb4e2191"

This verifier is recorded within the data area. For example, assuming that this is recorded at the start of the last sector of the data area, it is possible to write this verifier in the next location within the same sector.

A verifier recorded as noted above is used to check whether the characteristic information has been changed. First, the characteristic information in a specific area and different information that is a verifier in a specific area are input to a given function. If the resulting output value of the function is equal to a verifier in a specific area, the recorded characteristic information is taken as being verified. If, however, the output is not the same, the recorded characteristic information is taken as been erroneous.

With a disk onto which is recorded characteristic information, even in a disk recording/playback apparatus of the past, in order to read data the data area, a change in either software or firmware, without a change in hardware, was sufficient. Specifically, for example, this can be implemented by recording characteristic information in the last sector of the data area, or in an appropriate sector beyond which it is expected that data will not be recorded, and by recording a read-out flag before that sector, or at the beginning within that sector. In this manner, if the characteristic information is recorded in the last sector of the data area, because it is recorded after the data to be played back, when playing such as disk medium with a disk recording/playback apparatus of the past, playback is possible in exactly the same manner as with the usual disk. The same is true in the case in which the characteristic information is recorded in a sector beyond which it is expected that data will not be recorded. Note, however, that recording the characteristic information in the last sector of the data area provides the best efficiency, in which case for a sector size of, for example, of 2 K bytes, the data area is reduced by only 2 K bytes.

Another possible method is that of recording characteristic information that is separate from the read-in information within the read-in area, and it is also possible to record in the burst cutting area.

The above-noted burst cutting area is an area that is disposed at the innermost periphery of the disk, this area being one which assumes asynchronous readout, but an area of a different name having the same function can also be used.

In a disk recording/playback apparatus of the past, which does not have specification that enable reading of a burst cutting area, because the burst area is inherently ignored when performing playback, when playing back with disk recording/playback apparatus of the past, playback is possible exactly as with a usual disk.

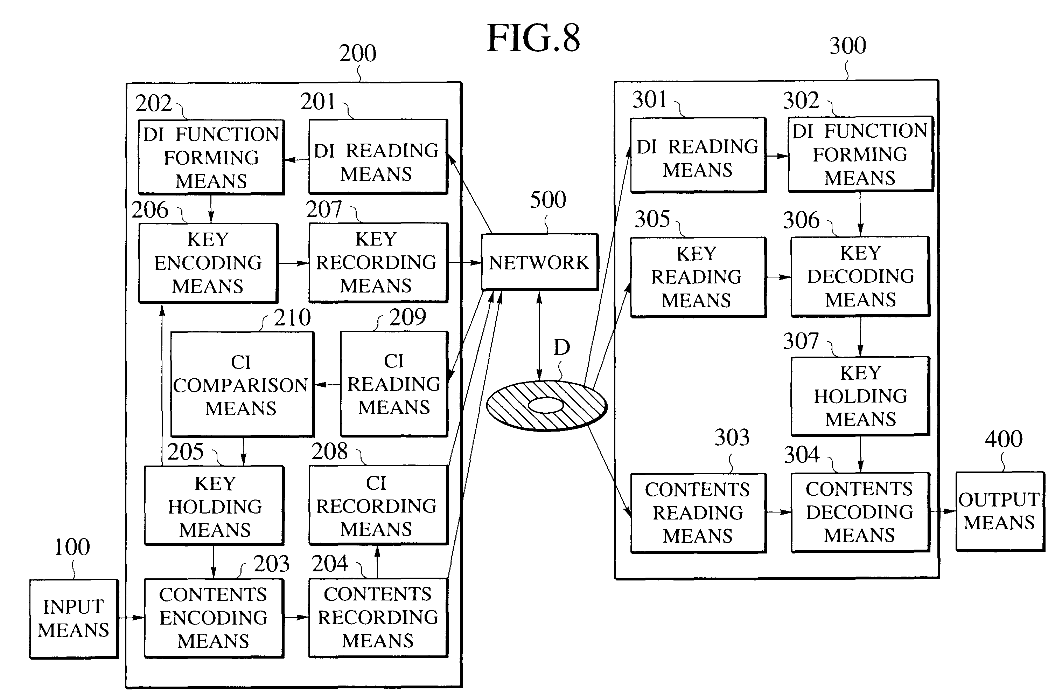

The third embodiment of the present invention is described below, with reference to Fig. 8. An apparatus used to implement the information protection method of the third embodiment makes use of characteristic information that is distinctively characteristic to each information recording medium and identification information that is distinctively characteristic to each of the contents in performing encoding of contents.

Fig. 8 is a block diagram that shows the configuration of an information protection apparatus according to the third embodiment of the present invention. As shown in Fig. 8, this information protection apparatus has an input mean 100 for inputting contents, such as moving images, static images, and music, an information recording means 200 for encoding and recording information such as the contents onto a general information recording medium D, an information playback means 300 for decoding and playing back of the information that is recorded on the information recording medium, and an output means 400 for outputting, for example, the decoded contents.

In the above-noted embodiment, the information recording means 200 has a DI reading means 201 for reading disk information that is recorded on each of the information recording media D, a DI function forming means 202 for forming a function of the characteristic information DI that is read by the DI reading means 201, a key holding means 205 for holding a key KEY for the purpose of encoding the contents CT that are input, a key encoding means 206 for encoding the key KEY that is held by the key holding means 205, in accordance with the characteristic information function F (DI), a key recording means 207 for recording the encoded key E (KEY) that is encoded by the key encoding means 206 onto the information recording medium D, a contents encoding means 203 for encoding the contents CT that are input via the input means 100, in accordance with the key KEY that is held by the key holding means 205, a contents recording means 204 for recording, via a network 500, the encoded contents E (CT) that are encoded by the contents encoding means 203 onto the information recording medium D. a CI recording means 208 for recording, via the network 500, characteristic identification information CI that is characteristic to the encoded contents E (CT) that were recorded by the contents recording means 204 onto the information recording medium D, a CI reading means 209 for reading the identification information CI that is recorded on the information recording medium D, and a CI comparison means 210 which has a recorded contents list that relates the contents to the key that was used to encode the contents, for comparing the contents with the identification information CI so as to search for the key for contents.

The 300 in the above-noted embodiment has a DI reading means 301 for reading the characteristic information DI that is recorded on each information recording medium D, a DI function forming means 302 for forming a function of the characteristic information DI that is read by the DI reading means 301, a key reading means 305 for reading the encoded key E (KEY) that is recorded on the information recording medium D, a key decoding means 306 for decoding the encoded key E (KEY), in accordance with the characteristic information function F (DI), a key holding means 307 for holding the key KEY that was decoded by the key decoding means 306, a contents reading means 303 for reading the encoded contents E (CT) that are recorded on the information recording medium D by the contents recording means 204, and a contents decoding means 304 for decoding the encoded contents E (CT), in accordance with the key KEY that is held in the key holding means 307 and for outputting these decoded contents to the output means 400.

The operation of the above-noted embodiment of an information protection apparatus according to the present invention is as follows.

First, when contents CT are input via the input means 100, the input contents CT are encoded by the contents encoding means 203, in accordance with the key KEY that is held in the key holding means 205, so as to obtain the encoded contents E (CT), these encoded contents E (CT) being recorded by the contents recording means 204, via the network 500, onto the disk D. Then, the identification information CI that is characteristic to these encoded contents E (CT) is also recorded, by the CI recording means 208.

At the DI reading means 201, the characteristic information DI of the disk D is read via the network 500, this characteristic information DI being formed into a function F (DI) by the DI function forming means 202. In the key encoding means 206, the key KEY that is held in the key holding means 205 is encoded, so as to obtain the encoded key E_{DI} (KEY), this being recorded by the key recording means 207, via the network 500, onto the disk D.

In the case in which a user is to play back the information recording medium D in the information playback means 300, the following occurs. First, in the case in which the disk to be played back is an original disk D that was properly recorded by the information recording means 200, the characteristic information DI is read from the disk by the DI reading means 301, this characteristic information DI being formed by the DI function forming means 302 into the characteristic information function F (DI), the encoded key E_{DI} (KEY) that was read by the key reading means 305 being decoded in the key decoding means 306 using the characteristic information function F (DI), so as to obtain the decoded key KEY, this decoded key KEY being held in the key holding means 307. Then, at the contents reading means 303, the encoded contents E (CT) are read from the disk D, these being decoded at the contents decoding means 304, in accordance with the key KEY that is held in the key holding means 307, so as to obtain the decoded contents CT, which are sent to the output means 400 for output.

Next, the case of playing back a copied disk D' is described below. In this case, because the characteristic information DI' that is read by the DI reading means 301 is different from the characteristic information DI of the original disk, it is not possible to play back the disk D' as is. Therefore, the characteristic information DI' is read by the DI reading means 201, and this characteristic information DI' is formed by the DI function forming means 202 into the function F (DI').

At the CI reading means 209, the identification information CI that is recorded on the disk D is read via the network 500, and at the CI comparison means 210, a comparison is made between this identification information CI and the contents list, so as to find the corresponding key KEY, which is then held in the key holding means 205. Then, the key KEY is encoded in the key encoding means 206, according to the characteristic information function F (DI) that was formed by the DI function forming means 202, so as to obtain the encoded key E_{DI} (KEY), which is recorded by the key recording means 207, via the network 500, onto the disk D'. When this is done, the key E_{DI} (KEY), which is encoded by the characteristic information DI of the original disk D is recorded on the disk D', although it is also possible to overwrite this with the newly encoded key E_{DI} (KEY), or to append this in a different area. Note, however, that in the case of appending, playback is done after verifying the latest key information. When the newly encoded key E_{DI} (KEY) is recorded onto the disk D', a fee can be charged by the provider of the contents.

Then, at the information playback means 300, the characteristic information DI' of the disk D' is read by the DI reading means 301, and the DI function forming means 302 forms from this the function F (DI'). The key reading means 305 reads the newly encoded key E_{DI} (KEY), and the key decoding means 306 decodes this encoded key E_{DI} (KEY) into the key KEY in accordance with the characteristic information function F (DI), the decoded key KEY being then held in the key holding means 307. Because the newly encoded key E_{DI} (KEY) is encoded by the function F (DI'), it is possible to decode this, not with the characteristic information DI of the original disk D, but rather with the characteristic information DI' of the copied disk.

At the contents reading means 303, the encoded contents E (CT) are read from the disk D', the content decoding means 304 then decoding these encoded contents E (CT) in accordance with the key KEY that is held in the key holding means 307, the resulting decoded contents CT being sent to the output means 400 for output.

While in the above-noted embodiment the characteristic information DI is formed into a function by the DI function forming means 202, this characteristic information function F (DI) being then used to encode the contents CT, it is also possible to encode the contents CT directly with the characteristic information DI, without first encoding the characteristic information DI, in which case the characteristic information DI is not formed into a function at the information playback apparatus 300 as well, the characteristic information DI being used there to decode the contents CT.

Additionally, while in the above-noted embodiment recording and reading of the information recording medium D is done via the network 500, it is also possible to perform, for example, direct recording onto the information recording medium D from the information recording means 200, without the intervening network 500.

Thus, in the information protection apparatus according to the third embodiment of the present invention, by comparing from the identification information CI with the contents list so as to find the key that was used to encode the contents, and then encoding that key with the characteristic information DI' of the copied disk D', it is possible at the information playback means 300 to decode the key from the characteristic information DI' of the copied disk D', thereby enabling the playback of the copied disk D'.

Because a fee can be charged by the contents provider when a newly encoded key E_{DI} (KEY) is recorded onto the disk D', it is not only possible to obtain revenue, but also to permit the use of the contents by disk copying, thereby enhancing the distribution of the contents.

An information protection method according to the fourth embodiment of the present invention is described below.

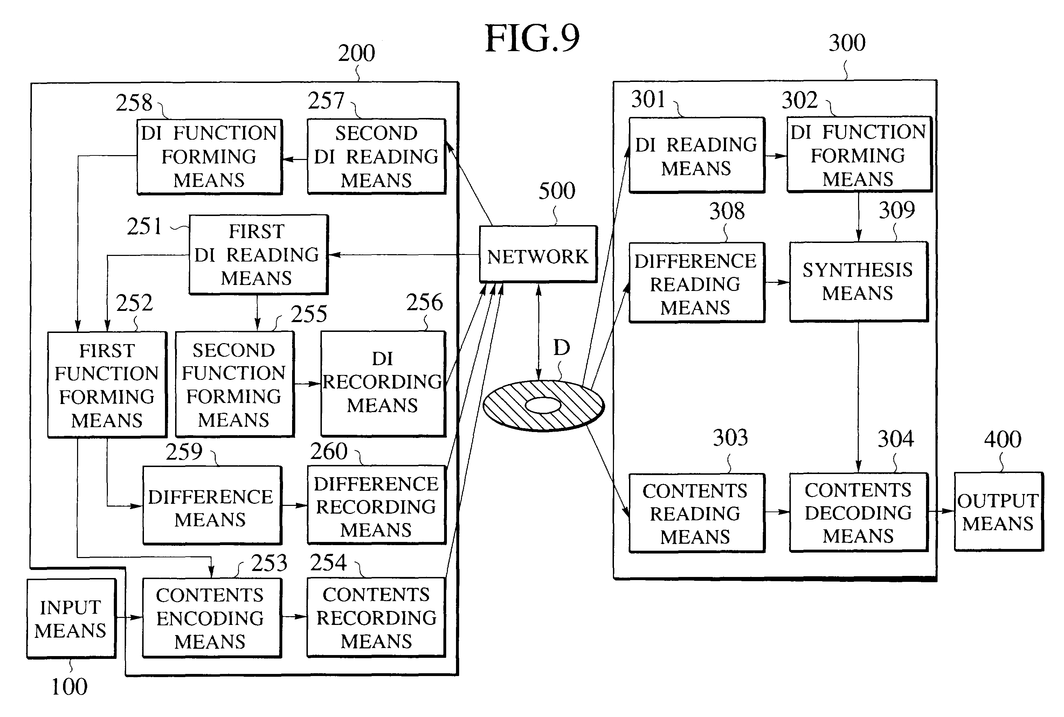

Fig. 9 is a block diagram of an apparatus for implementing a method of information protection according to the fourth embodiment. As shown in Fig. 9, the method for information protection of this embodiment, similar to the case of the third embodiment, has an input means 100, an information recording means, 200, an information playback means 300, and an output means 400.

In the above-noted, the information recording means 200 has a first DI reading means 251 for reading, via a network 500, the characteristic information DI that is recorded on each information recording medium D, a first function forming means 252 for forming a function from the characteristic information DI that was read by the first DI reading means 251, a contents encoding means 253 for encoding contents that are input via the input means 100, in accordance with the characteristic information function F (DI) that is formed by the first function forming means 252, a contents recording means 254 for recording the contents E (CT) that were encoded by the contents encoding means 253 onto an information recording medium D, via the network 500, a second function forming means 255 for forming, from the characteristic information DI that was read by the first DI reading means 251, a different function from that of the first function forming means 252, a DI recording means 256 for recording a characteristic information function F' (DI) that is formed by the second function forming means 255 onto the information recording medium D, via the network 500, a second DI reading means 257 for reading, via the network 500, the characteristic information function F' (DI) that is recorded on the information recording medium D, a DI decoding means 258 for decoding the characteristic information function F' (DI) by means of the inverse function F'⁻¹ (including code decoding) of the function used in the second function forming means 255, a difference means 259 for generating the difference F (DI) - F (DI') between the characteristic information functions F (DI) and F (DI') generated by the first function forming means 252, and a difference recording means 260 for recording, via the network 500, the difference F (DI) - F (DI') generated by the difference means 259 onto the information recording medium D.

In the above-noted embodiment, the information playback means 300 has a DI reading means 301 for reading the characteristic information DI that is recorded on each information recording medium D, a DI function forming means 302 for forming a function of the characteristic information DI that is read by the DI reading means 301, a difference reading means 308 for reading the difference F (DI) - F (DI') that is recorded on the information recording medium D, a synthesis means 309 for synthesizing this difference F (DI) - F (DI') and the characteristic information function D (DI') so as to generated the characteristic information function F (DI), a contents reading means 303 for reading the encoded contents E (CT) that are recorded on the information recording medium D, and a contents decoding means 304 for decoding the encoded contents E (CT) that are read by the contents reading means 303 in accordance with the characteristic information function F (DI) that is generated by the synthesis means 309 and outputting the result to the output means 400 for output.

The operation of the above-noted fourth embodiment of an information protection apparatus according to the present invention is as follows.

First, when contents CT are input via the input means 100, the characteristic information DI of the disk D are read by the first DI reading means 251, and this characteristic information DI is formed into the function F (DI) by the first function forming means 252. Then, at the contents encoding means 253, the input contents are encoded in accordance with the characteristic information function F (DI), so as to obtain the encoded contents E (CT), these encoded contents being then recorded by the contents recording means 254 onto the disk D via the network 500. At the second function forming means 255, the characteristic information DI that was read by the first DI reading means 251 is formed into a function in accordance with a function F', which is a different function from the first function forming means 252, so as to obtain the function F (DI'), this being recorded by the DI recording means 256 onto the disk D via the network 500.

Next, in the case in which a user is to play back the information recording medium D in the information playback means 300, the following occurs. First, in the case in which the disk to be played back is an original disk D that was properly recorded by the information recording means 200, the characteristic information DI is read from the disk D by the DI reading means 301, and this is formed into the function F (DI) by the function forming means 302. At this point, in the case of playing back of an original disk D, it is not necessary to have the difference reading means 308 read the difference, and further not necessary to have the synthesis means 309 perform synthesis. Because of this, at this point the contents decoding means 304 decodes the encoded contents E (CT) that were read by the contents reading means 303, the result being the contents CT, these being sent to the output means 400 for output.

Next, consider the case in which the disk to be played back is a copied disk D'. In this case, since the characteristic information DI' that is read by the DI reading means 301 is different from the characteristic information DI of the disk D, it is not possible to read the disk D' as is. Because of this, the characteristic information function F' (DI) that is formed by the second function forming means 257 of the information recording means 200 is read, and this is decoded at the DI decoding means 258 to obtain the characteristic information DI, by applying the inverse function F'⁻¹. Thus, by pre-recording the function F' (DI) onto the original disk D and storing the inverse function F'⁻¹, it is possible to perform decoding so as to obtain the characteristic information DI of the original disk D. Because the inverse function F'⁻¹ is only known to the contents provider, it is possible to prevent unauthorized copying.

The characteristic information DI that is obtained in the above-noted manner is formed into a function by the first function forming means 252, so as to obtain the function F (DI). The characteristic information DI' of the copied disk is read by the first DI reading means 251, this being formed into a function by the first function forming means 252, so as to obtain the function F (DI').

At the difference means 259 the difference F (DI) - F (DI') of the characteristic information functions F (DI) and F (DI') is generated, this difference being recorded by the difference recording means 260 onto the disk D', via the network 500. When this is done, even if the function F' (DI) of the disk D' overlaps with a recorded part, the function F' (DI) can be left in another area. When the difference F (DI) - F (DI') is recorded onto the disk D', a fee can be charged by the provider of the contents.

At the information playback means 300, the difference reading means 308 reads the difference F (DI) - F (DI') from the disk D', this difference F (DI) - F (DI') and the function F (DI') that was formed by the DI function forming means 302 being synthesized by the synthesizing means 309, so as to obtain the function F (DI). This function F (DI) is used by the contents decoding means 304 to decode the encoded contents E (CT) that are read by the content reading means 303, thereby obtaining contents CT, which are sent to the output means 400 for output.

While the above-noted embodiment is for the case in which recording and reading of the disk D are performed via the network 500, it is also possible to directly record onto the disk D from the information recording means 200, without an intervening network 500.

According to the above-noted information protection apparatus of the fourth embodiment of the present invention, by pre-recording the function F' (DI) onto the original disk D, and storing the inverse function F'⁻¹ in the DI decoding means 258, it is possible to decode and know the characteristic information DI of the original disk D. Additionally, by generating the difference between the characteristic information DI of the original disk D and the characteristic information DI' of the copied disk D' and recording this on the copied disk D', it is possible at the information playback means 300 to synthesize this difference and the characteristic information function F (DI') of the copied disk D' so as to obtain the function F (DI), making it possible to decode the encoded contents.

Seen from the contents provider side, when recording the difference F (DI) - F (DI') onto the disk D', because a fee can be charged, it is not only possible to obtain revenue, but also to permit the use of the contents by disk copying, thereby enhancing the distribution of the contents.

Additionally, because the inverse function F'⁻¹ is only known to the contents provider, it is possible to prevent unauthorized copying.

In an information protection method according to the present invention, in order to prevent unauthorized copying, it is necessary that the characteristic information DI recorded on the information recording medium be recorded by a method that prevents its being easily tampered with.

A write-once or overwritable information recording medium (disk medium) onto which information is recorded in the form of concentric circles or a spiral often has areas into which a general user cannot record, these being a BCA (burst cutting area) 3 and a read-in area 2, in addition to a data area 1, into the user can record, as shown in Fig. 4. In such a disk medium, by recording the characteristic information DI (which can be arbitrarily formatted of numbers, symbols, letters, and other data) into a specific area, or by using a method whereby this recording is done at the time the disk is manufactured, it is possible to distinguish between each individual disk.

The above-noted characteristic information DI is information which is either a unique identifier for each of the disk media, or an identifier that is not likely to be the same as the characteristic information DI of another disk. While the above-noted specific area can be made the BCA (burst cutting area) 3, the read end area 2, or the data area 1 that are shown in Fig. 4, the specific area is not limited to these areas, and can be selected as any arbitrary recording area.

It is necessary to record this characteristic information DI by a method that is not usable by the user to record, or which prevents the user from making an unauthorized modification to the characteristic information. For example, it is possible to record this by such methods as mechanical embossed pits that are made on the disk, using a strong on/off-switched laser light to change the reflectivity of the disk by either changing the composition of or destroying the disk in a minute region thereof, or destroying a part of a signal that is mechanically pre-recorded on the disk.

## Claims

1. A method for recording information, comprising the steps of:
pre-recording onto each information recording medium characteristic information that is distinctively characteristic thereto by using a method that prevents the characteristic information from being changed;
encoding information by using the characteristic information as a key; and
recording the encoded information onto the information recording medium.

2. An information recording apparatus that encodes and records information onto an information recording medium, comprising:
means for reading characteristic information that is recorded onto the information recording medium, and which is distinctively characteristic to each information recording medium;
means for encoding contents that are input, in accordance with characteristic information that was read by the characteristic information reading means; and
means for recording the contents, which are encoded by the contents encoding means, onto the information recording medium.

3. An information playback apparatus that decodes and plays back information that is recorded on an information recording medium, comprising:
means for reading distinctively characteristic information that is recorded on each information recording medium;
means for reading encoded contents that are recorded on the information recording medium; and
means for decoding the encoded contents that are read by the contents reading means, in accordance with the characteristic information and outputting the decoded contents.

4. A method for protection information, comprising the steps of:
pre-recording onto each information recording medium characteristic information that is distinctively characteristic thereto by using a method that prevents the characteristic information from being changed;
encoding information by using the characteristic information as a key;
recording the encoded information onto the information recording media; and
decoding the recorded information in accordance with the characteristic information and playing back the decoded information.

5. A method for protecting information according to claim 4, further comprising the step of:
generating a verifier from the characteristic information and information for verification and making a judgment as to whether or not this verifier is the same as a verifier that is recorded on an information recording medium.

6. An information recording medium, onto which is recorded information that is distinctively characteristic to the individual information recording medium, either using a method that prevents changing the characteristic information, or in an area that cannot be changed.

7. A method for protecting information, in which information is encoded according to a key and recorded onto an information recording medium that has characteristic information that is distinctively characteristic to the individual information recording medium, the information that is recorded onto the information recording medium being decoded by the key and played back, the method comprising the steps of:
recording the key that is encoded by the characteristic information and identification information that is distinctively characteristic of each information onto the information recording medium; and
identifying the key that was used to encode the information by means of the identification information, decoding the encoded information with the key, and playing back the information.

8. A method for protecting information, whereby information is encoded and recorded onto an information recording medium that has information that is distinctively characteristic to the individual recording medium, the information that is recorded onto the information recording medium being decoded and played back, the method comprising the steps of:
recording the information that was encoded in accordance with the characteristic information and a characteristic information function that was formed from the characteristic information onto the information recording medium; and
decoding the characteristic information function and generating from the resulting characteristic information a difference, thereby decoding the encoded information, and playing back the decoded information.

9. An information recording medium, onto which is recorded information that is distinctively characteristic thereto, either using a method that prevents changing the characteristic information, or in an area that cannot be changed, and also onto which is recorded identifying information that is distinctively characteristic of each information.

10. An information recording medium, onto which is recorded information that is distinctively characteristic thereto, either using a method that prevents changing the characteristic information, or in an area that cannot be changed, and also onto which is recorded a difference that is generated from the characteristic information.
